# DEMANDE DE BREVET EUROPEEN

(11) **EP 3 122 020 A1**
(43) Date de publication de la demande: **25.01.2017**
(21) Numéro de dépôt: 16180074.3
(22) Date de dépôt: 19.07.2016
(51) Int. Cl.: H04L 29/14

(54) **PROCEDE DE SAUVEGARDE DE L'ENVIRONNEMENT DE TRAVAIL D'UNE SESSION D'UN UTILISATEUR SUR UN SERVEUR**

(30) Priorité: 20.07.2015 FR 1556852
(71) Demandeur: BULL SAS, 78340 Les Clayes sous Bois (FR)
(72) Inventeur: COHARD, Sylvain, 38100 Grenoble (FR); ESCOVAR, Rafael, 38100 Grenoble (FR)
(74) Mandataire: Cabinet Plasseraud

(57) **Abrégé**

L'invention concerne un procédé de sauvegarde de l'environnement de travail d'une session d'un utilisateur (7) sur un serveur (1) comprenant une première étape (11) de sauvegarde de l'environnement de travail d'une première application de ladite session, caractérisé en ce qu'il comprend au moins une deuxième étape (12) de sauvegarde de l'environnement de travail d'une deuxième application de ladite session différente de ladite première application, et en ce que ladite première étape (11) de sauvegarde et ladite deuxième étape (12) de sauvegarde sont synchronisées entre elles de manière à ce que l'environnement de travail sauvegardé de la première application et l'environnement de travail sauvegardé de la deuxième application soient cohérents entre eux.

## Description

### DOMAINE DE L'INVENTION

L'invention concerne le domaine des procédés de sauvegarde de l'environnement de travail d'une session d'un utilisateur sur un serveur, ainsi que le domaine des réseaux de serveurs utilisant de tels procédés de sauvegarde.

### CONTEXTE DE L'INVENTION

Selon un art antérieur, il est connu un procédé de sauvegarde de l'environnement de travail d'une application fonctionnant au cours d'une session d'un utilisateur sur un serveur. La sauvegarde est effectuée au niveau de cette application par un procédé de sauvegarde intégré à cette application. Ensuite, l'application peut être relancée à partir de cette sauvegarde après la survenue d'un incident lorsque celui-ci a ensuite disparu. C'est une séquence de sauvegarde / redémarrage (« checkpoint / restart » en langue anglaise).

Idéalement, pour restaurer l'ensemble d'une session d'un utilisateur sur un serveur, il faudrait que chacune des applications lancées au cours de la session ait un tel procédé de sauvegarde. Dans ce cas, chaque procédé de sauvegarde a sauvegardé un état de l'application correspondante, de manière totalement indépendante des autres applications de la session. Chaque application est relancée séparément sur la base de l'état de l'environnement de travail qui avait été sauvegardé à son niveau.

La nécessité d'implémenter plusieurs procédés de sauvegarde respectivement dans les différentes applications pour relancer séparément les différentes applications rend cet art antérieur complexe. Par ailleurs, les sauvegardes ayant été faites pour chaque application indépendamment des autres applications, il existe un risque d'incohérence entre états sauvegardés.

Cette incohérence peut obliger à remonter pour l'une et ou l'autre des applications à un état sauvegardé antérieur, et ainsi de suite jusqu'à ce que les seuls états sauvegardés présentant une certaine cohérence entre eux se trouvent être les états initiaux des applications, c'est l'effet domino qu'il s'agit d'éviter.

### RESUME DE L'INVENTION

Le but de la présente invention est de fournir un procédé de sauvegarde palliant au moins partiellement les inconvénients précités.

Plus particulièrement, l'invention vise à fournir un procédé de sauvegarde pouvant sauvegarder au moins deux applications lancées au cours d'une session et pouvant relancer les deux applications dont les états ont été sauvegardés sans risquer un effet domino.

Pour relancer une session dans laquelle au moins deux applications avaient été lancées, il faudrait tout abord que chaque application ait son procédé de sauvegarde, et il faudrait ensuite pouvoir harmoniser entre eux les états sauvegardés. Chaque procédé de sauvegarde évoluant indépendamment des autres au niveau de son application, cette harmonisation risque d'être difficile et fastidieuse.

L'invention propose d'utiliser un procédé de sauvegarde commun aux deux applications, effectuant des sauvegardes synchronisées des deux applications, de manière à ce que leurs environnements de travail respectifs sauvegardés soient cohérents entre eux. Ainsi, une relance simultanée des deux applications de la session, voire préférentiellement de toutes les applications de la session, c'est-à-dire de l'ensemble de la session, est rendue plus facile et plus rapide, grâce aux différents environnements de travail sauvegardés et cohérents entre eux, correspondant aux différentes applications respectives lancées au cours de la session.

A cette fin, la présente invention propose un procédé de sauvegarde de l'environnement de travail d'une session d'un utilisateur sur un serveur comprenant une première étape de sauvegarde de l'environnement de travail d'une première application de ladite session, caractérisé en ce qu'il comprend au moins une deuxième étape de sauvegarde de l'environnement de travail d'une deuxième application de ladite session différente de ladite première application, et en ce que ladite première étape de sauvegarde et ladite deuxième étape de sauvegarde sont synchronisées entre elles de manière à ce que l'environnement de travail sauvegardé de la première application et l'environnement de travail sauvegardé de la deuxième application soient cohérents entre eux.

A cette fin, la présente invention propose également un réseau de serveurs caractérisé en ce qu'il stocke et qu'il est configuré pour effectuer régulièrement, et de préférence périodiquement, le procédé de sauvegarde selon l'invention, au niveau de plusieurs serveurs dudit réseau, et préférence au niveau de tous les serveurs dudit réseau.

L'invention est peu coûteuse en termes de mise en oeuvre. Elle est également peu coûteuse en ressources machine comme par exemple la place disque, le besoin mémoire ou le besoin processeur.

Suivant des modes de réalisation préférés, l'invention comprend une ou plusieurs des caractéristiques suivantes qui peuvent être utilisées séparément ou en combinaison partielle entre elles ou en combinaison totale entre elles, avec l'un ou l'autre des objets de l'invention précités.

De préférence, l'environnement de travail de ladite première application et l'environnement de travail de ladite deuxième application partagent entre elles des données communes dont l'état est variable au cours du temps, et l'état desdites données communes sauvegardées est identique pour les deux étapes de sauvegarde. Ainsi, le caractère identique des données communes sauvegardées assure une parfaite cohérence entre les états sauvegardés des deux applications.

De préférence, toutes les étapes de sauvegarde de toutes les applications de ladite session sont synchronisées entre elles comme lesdites première et deuxième étapes de sauvegarde. Ainsi, l'ensemble de la session peut être sauvegardée et récupérée facilement par le procédé de sauvegarde selon l'invention, puisque toutes les applications lancées dans cette session auront été d'une part sauvegardées et d'autre part de manière cohérente entre elles.

De préférence, toutes les sessions sur ledit serveur sont sauvegardées de la même manière. Ainsi, l'ensemble des sessions peut être sauvegardé et récupéré facilement par le procédé de sauvegarde selon l'invention, puisque toutes les sessions en cours auront été d'une part sauvegardées et d'autre part de manière cohérente entre elles.

De préférence, toutes les sessions de tous les serveurs d'un même réseau sont sauvegardées de la même manière. Ainsi, l'ensemble de toutes les sessions sur un même réseau peut être sauvegardé et récupéré facilement par le procédé de sauvegarde selon l'invention, puisque toutes les sessions en cours sur l'ensemble du réseau auront été d'une part sauvegardées et d'autre part de manière cohérente entre elles.

De préférence le procédé de sauvegarde selon l'invention comprend, après lesdites étapes de sauvegarde, une étape de redémarrage de ladite ou desdites sessions avec son ou leur environnement de travail sauvegardé. Ainsi, jusqu'au moment de la sauvegarde, tout le travail effectué aura été conservé, et l'utilisateur n'aura pas à le recommencer depuis le début.

De préférence, lesdites étapes de sauvegarde sont effectuées régulièrement, et de préférence périodiquement, et ladite étape de redémarrage est effectuée une fois qu'un incident survenu au niveau dudit serveur est terminé, l'incident étant de préférence une coupure d'alimentation dudit serveur ou une panne matérielle ou logicielle dudit serveur ou une maintenance dudit serveur. Ainsi, l'effet de l'incident, qui peut être désastreux en temps normal, sera ici limité à la perte de la courte période de travail effectuée entre la dernière sauvegarde et l'incident survenu.

De préférence, lesdites étapes de sauvegarde sont effectuées à l'initiative de l'utilisateur, et ladite étape de redémarrage est effectuée à l'initiative de l'utilisateur. Ainsi, l'utilisateur peut sauvegarder à volonté l'état de l'ensemble de la session lorsque cet état lui convient avant de se lancer dans une modification, éventuellement plus hasardeuse, de cet état, sachant qu'il pourra en cas d'échec, revenir facilement à cet état sauvegardé intéressant d'où il pourra à nouveau repartir.

De préférence, lesdites étapes de sauvegarde sont effectuées sur ledit serveur, et ladite étape de redémarrage est effectuée sur un autre serveur différent dudit serveur lorsque ledit serveur reste indisponible après la survenue d'un incident, pendant un temps dépassant une durée prédéterminée, ledit l'environnement de travail sauvegardé étant communiqué à l'autre serveur, préalablement à ladite étape de redémarrage. Ainsi, même en cas d'indisponibilité prolongée du serveur sur lequel l'utilisateur travaillait, cet utilisateur peut tirer parti immédiatement de la sauvegarde effectuée en redémarrant sa session sauvegardée sur un autre serveur qui d'une part est disponible et qui d'autre part dispose des informations nécessaires pour permettre le redémarrage de cette session sauvegardée.

De préférence, lesdits environnements de travail à sauvegarder sont sauvegardés dans une structure de stockage commune à plusieurs serveurs d'un même réseau, et de préférence commune à tous les serveurs d'un même réseau. Ainsi, le niveau de communication sur le réseau et par conséquent le niveau de bruit sur le réseau est nettement diminué par rapport à un système où les serveurs stockeraient dans leur propre mémoire leur environnement de travail pour ensuite le communiquer à tous les autres serveurs pouvant en avoir besoin. Là, au contraire, tous les environnements de travail sont stockés dans un même endroit que les autres serveurs peuvent aller consulter directement mais qu'ils ne vont consulter qu'en cas de besoin. De cette manière, seul le serveur qui va remplacer un autre serveur indisponible va consulter cet endroit pour obtenir l'environnement de travail sauvegardé et non pas tous les serveurs du réseau.

De préférence, ladite structure de stockage commune à plusieurs serveurs d'un même réseau est distribuée sur ces mêmes serveurs et utilise une partie du disque de stockage de plusieurs de ces serveurs ou de tous ces serveurs. Les informations sont réparties entre les serveurs, et chaque information est dupliquée, c'est-à-dire stockée au final sur au moins deux serveurs, mais bien sûr pas sur tous les serveurs. Ainsi, le lieu de stockage fonctionnellement unique, réduit la communication et le bruit sur le réseau, tandis que le caractère structurellement distribué de ce lieu de stockage fonctionnellement unique, permet l'utilisation de ressources disponibles et inemployées sur les différents serveurs, donc de ressources peu coûteuses, tandis que créer une grande mémoire centralisée pour stocker tous ces environnements sauvegardés coûterait une ressource supplémentaire de taille relativement importante. La distribution du stockage, qui implique une répartition des informations avec une duplication à certains endroits mais pas partout, permet tout à la fois de gagner de la place et d'assurer une certaine redondance pour ne pas perdre l'information en cas de corruption localisée de cette information.

De préférence, chacun des serveurs d'un même réseau signale régulièrement, et de préférence périodiquement, à plusieurs autres serveurs dudit réseau, et de préférence à tous les autres serveurs dudit réseau, s'il est opérationnel ou non. Ainsi, le caractère indisponible d'un serveur dans le réseau est immédiatement repéré. Certes, cela entraîne la circulation d'un peu d'information sur le réseau, mais en très faible quantité, et incommensurablement moins que le volume d'information qui serait nécessité par la communication régulière des environnements sauvegardés. Par ailleurs, cela évite de devoir stocker cette information très sensible, à savoir le caractère disponible ou indisponible de tous les serveurs, en un unique endroit qui deviendrait alors le maillon faible du système car en cas de panne à ce niveau, c'est tout le réseau qui serait paralysé au niveau de la réalisation des sauvegardes. L'envoi de cette information de disponibilité d'un serveur aux autres serveurs (« heartbit » en langue anglaise) du réseau assure le bon fonctionnement robuste des sauvegardes.

De préférence, lorsqu'un serveur d'un réseau devient indisponible, un utilisateur ayant ouvert une session sur ce serveur, signale cette indisponibilité, à une adresse commune ou à un ordonnanceur de ressources, de manière à pouvoir redémarrer, sur un autre serveur de ce réseau, sa session sauvegardée qui avait été ouverte sur le serveur maintenant indisponible. Cet élément particulier du réseau va organiser la relève et affecter à cet utilisateur le serveur remplaçant adéquat, c'est-à-dire le serveur disponible qui peut être utilisé par cet utilisateur en n'entraînant qu'une perturbation minimale au niveau du fonctionnement de l'ensemble du réseau.

De préférence, les fonctionnalités dudit procédé sont stockées dans l'espace utilisateur dudit serveur mais sont gérées par le noyau dudit serveur. Ainsi, ce procédé de sauvegarde est dans une large mesure rendu indépendant du système d'exploitation effectivement utilisé par le noyau du serveur.

De préférence, lors de la sauvegarde dudit environnement de travail, sont sauvegardées au moins : les variables d'environnement de la session, l'historique des commandes pendant la session, les fonctions utilisées par l'utilisateur mais non définies lors de la connexion de l'utilisateur en début de session, les applications en cours d'exécution pendant la session. Ainsi, les principaux éléments d'une session en cours seront sauvegardés et cette session pourra redémarrer avec une efficacité similaire à celle qu'elle aurait eu sans incident, dans un nombre de cas supérieur à 95% des cas potentiels.

De préférence, le réseau de serveurs ne comprend pas de système de maintien de l'alimentation électrique en cas d'incident, et de préférence il ne comprend pas d'onduleur. Ainsi, en cas d'incident, il n'y a pas de système qui puisse prolonger la disponibilité du serveur, éventuellement jusqu'à la fin de l'incident, lequel incident aurait alors été transparent pour le serveur. Au contraire, en cas d'incident, le serveur devient immédiatement défaillant, ce qui rend encore plus intéressant la présence du procédé de sauvegarde selon l'invention, pour pallier les effets de cette défaillance du serveur. Plus la taille du réseau de serveurs augmente, et plus il devient complexe et très coûteux de lui associer ce type de système de maintien de l'alimentation électrique qui est par exemple un onduleur.

De préférence, le réseau de serveurs comprend au moins 2 serveurs, de préférence au moins 10 serveurs, encore plus de préférence au moins 100 serveurs, et encore plus de préférence au moins 1000 serveurs. Plus le nombre de serveurs est grand, plus le nombre d'incidents susceptibles de perturber les sessions en cours est grand, et plus la présence du procédé de sauvegarde selon l'invention devient intéressante pour pallier les effets toujours plus nombreux de ce nombre croissant d'incidents.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple de réseau de serveurs pouvant mettre en oeuvre le procédé de sauvegarde selon un mode de réalisation de l'invention.
La figure 2 représente schématiquement un exemple de déroulement d'étapes du procédé de sauvegarde selon un mode de réalisation de l'invention.

### DESCRIPTION DETAILLEE DE L'INVENTION

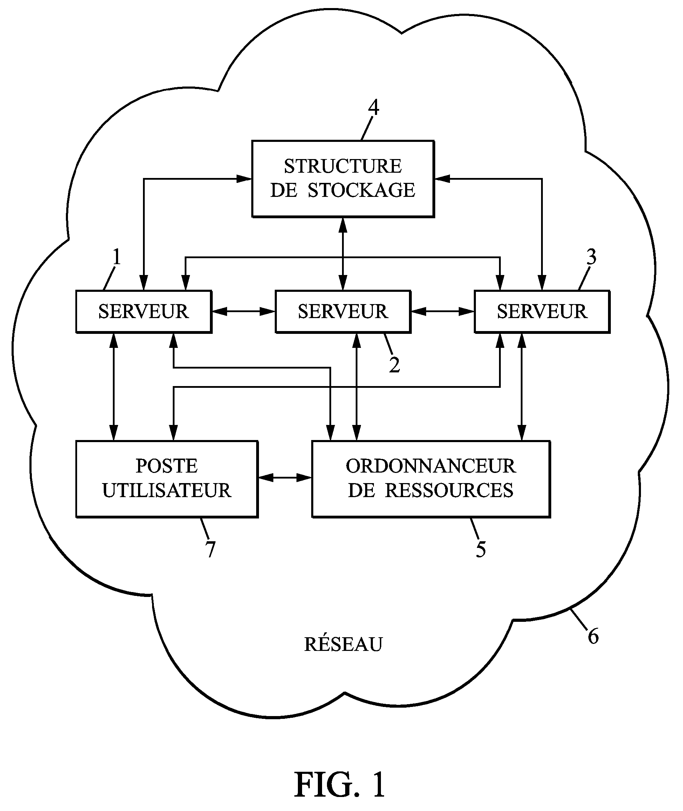

La figure 1 représente schématiquement un exemple de réseau de serveurs pouvant mettre en oeuvre le procédé de sauvegarde selon un mode de réalisation de l'invention. Les flèches indiquent des communications entre éléments de réseau avec le sens de communication.

Un réseau 6 comprend de nombreux serveurs. Ici, pour des raisons de clarté, seuls les serveurs 1, 2 et 3 sont représentés. Le réseau 6 comprend également une structure de stockage 4 et un ordonnanceur de ressources 5.

Un utilisateur 7 a ouvert une session sur le serveur 1. L'utilisateur 7 est un poste ordinateur client du serveur 1. Les serveurs 1, 2 et 3, communiquent entre eux pour se dire qu'ils sont opérationnels, c'est-à-dire disponibles. Les serveurs 1, 2 et 3, effectuent périodiquement des sauvegardes de toutes leurs sessions sur la structure de stockage 4. Les démons, c'est-à-dire les logiciels tournant en tâche de fond, gérant le système de sauvegarde et de redémarrage se synchronisent entre eux afin d'être certains d'avoir les informations de sessions des utilisateurs, en cas de besoin.

Un incident survient au niveau du serveur 1 et la session de l'utilisateur 7 est brutalement arrêtée et perdue. Une copie de cette session arrêtée existe dans la structure de stockage 4, cette copie correspond à l'état de cette session lors de la dernière sauvegarde effectuée, soit en général un temps assez court avant la survenue de l'incident. Le serveur 1 est indisponible, il a donc cessé d'envoyer son signal de disponibilité aux serveurs 2 et 3 qui savent donc que le serveur 1 est devenu indisponible. L'utilisateur 7 signale à l'ordonnanceur de ressources 5 l'arrêt de sa session. Si lors de la fin de l'incident, et si même pendant une certaine durée après la fin de l'incident, le serveur 1 reste toujours indisponible, alors selon des critères de priorité prédéfinis incluant par exemple le volume de tâches en cours, la mémoire disponible, etc ..., l'ordonnanceur de ressources 5 choisit un autre serveur disponible parmi les serveurs restants 2 et 3, par exemple le serveur 3.

Le serveur 3 choisi télécharge l'environnement de travail sauvegardé de la session de l'utilisateur 7 sur le serveur 1, à partir de la structure de stockage 4. Le serveur 3 rouvre la session de l'utilisateur 7 qui va se trouver connecté sur le serveur 3 avec sa session rouverte avec l'environnement de travail sauvegardé. Cette réouverture de session de l'utilisateur 7 peut lui avoir été signalé auparavant par l'ordonnanceur de ressources 5. L'utilisateur 7 peut reprendre sa session dans l'état où elle était lors de la dernière sauvegarde, mais cette fois-ci sur le serveur 3.

Si le serveur 1 redevient disponible à la fin de l'incident, ou dans un délai prédéterminé après la fin de l'incident, l'utilisateur 7 va reprendre sa session dans les mêmes conditions, mais en la reprenant cette fois-ci sur le même serveur 1. Si, au lieu de la survenue d'un incident, c'est une sauvegarde à l'initiative de l'utilisateur 7 qui a eu lieu, la session peut être arrêtée, également à l'initiative de l'utilisateur 7, pour reprendre au niveau de la dernière sauvegarde effectuée à l'initiative de l'utilisateur 7, et cette fois-ci bien sûr préférentiellement sur le même serveur 1.

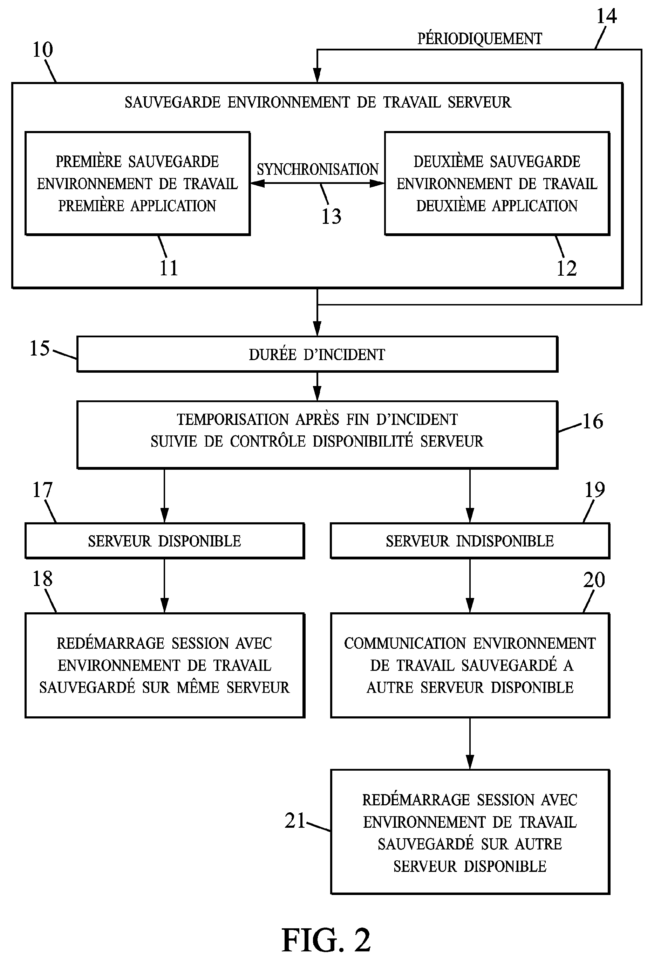

La figure 2 représente schématiquement un exemple de déroulement d'étapes du procédé de sauvegarde selon un mode de réalisation de l'invention.

Le procédé comprend une étape 10 de sauvegarde de l'environnement de travail d'une session d'un utilisateur sur un serveur donné. Dans cette étape 10 de sauvegarde de l'environnement de travail d'une session d'un utilisateur sur un serveur donné, sont effectuées deux sous-étapes 11 et 12. Une sous-étape 11 de première sauvegarde de l'environnement de travail d'une première application dans cette session d'utilisateur et une sous-étape 12 de deuxième sauvegarde de l'environnement de travail d'une deuxième application dans cette session d'utilisateur. Une synchronisation 13 réalise la synchronisation entre les deux sous-étapes 11 et 12. Une boucle 14 permet d'effectuer cette étape 10 de sauvegarde de l'environnement de travail de cette session d'utilisateur de manière périodique.

Les informations liées à l'environnement de travail de la session de l'utilisateur sur un serveur sont tracées. Ces traces sont stockées dans le répertoire propre à l'utilisateur et sont lues au démarrage d'une session permettant à l'utilisateur de reprendre son travail en cours. Toutefois, en l'absence de sauvegarde, et en cas d'incident, toutes ces informations risquent d'être perdues.

L'environnement de travail sauvegardé comprend notamment par exemple : les variables d'environnement, l'historique des commandes, les alias, c'est-à-dire par exemple des raccourcis de commandes ou des routines de fin de commandes, non définis lors de la connexion de l'utilisateur, les processus spécifiques en cours d'exécution. De plus, un service spécifique est activé afin de sauvegarder l'information de sessions et la rendre utilisable sur plusieurs serveurs différents, en cas d'indisponibilité prolongée du serveur d'origine. Cette information de session inclut des métadonnées, comme par exemple le nom de l'utilisateur, l'identifiant du serveur, l'identifiant de la session, les dates de connexion et de déconnexion de l'utilisateur. Par ailleurs, un outil peut être prévu afin que l'utilisateur puisse sauvegarder son environnement et le restaurer à sa guise sur le même serveur ou bien sur un autre serveur distinct en cas d'indisponibilité prolongée du serveur d'origine.

Un incident survient et dure un certain temps pendant lequel cette session d'utilisateur est arrêtée et pendant lequel le serveur d'origine sur lequel se déroulait cette session d'utilisateur est indisponible. C'est l'étape 15 de durée d'incident.

A la fin de l'incident, une étape 16 de temporisation est lancée et à la fin de cette étape 16 de temporisation, c'est-à-dire après l'écoulement d'une durée prédéterminée après la fin de l'incident, la disponibilité du serveur victime de l'incident (serveur d'origine) est évaluée : soit ce serveur est à nouveau disponible, soit ce serveur est toujours indisponible.

Si ce serveur est à nouveau disponible, ce qui correspond à l'étape 17, alors un redémarrage de cette session d'utilisateur est effectué sur la base de l'environnement de travail sauvegardé, sur le serveur victime de l'incident.

Si ce serveur est toujours indisponible, ce qui correspond à l'étape 19, d'abord l'environnement de travail sauvegardé est communiqué à un autre serveur disponible, distinct du serveur victime de l'incident qui est toujours indisponible, au cours d'une étape 20 de communication, et ensuite une étape 21 de redémarrage de cette session d'utilisateur est effectué sur la base de l'environnement de travail sauvegardé, mais sur cet autre serveur disponible distinct du serveur victime de l'incident.

Voici maintenant le déroulement d'un simple exemple d'utilisation dans un environnement avec un socle Linux (« Bash Linux » en langue anglaise). L'utilisateur est en pleine écriture d'un programme avec un certain éditeur X. Il travaille sur un serveur distant Linux depuis son poste de travail Windows (marque déposée). Le serveur distant s'arrête suite à une coupure électrique. L'utilisateur se connecte sur un autre serveur présent, le système détecte qu'il n'est pas sur le même serveur, et lui propose de reprendre son travail commencé. Le démon de ce nouveau serveur a détecté que le démon de l'ancien serveur n'est plus là ou que la session a eu un souci. Ainsi, grâce à la sauvegarde effectuée, l'utilisateur n'aura été que peu perturbé par l'incident et aura pu rapidement reprendre sa session dans de bonnes conditions.

Bien entendu, la présente invention n'est pas limitée aux exemples et au mode de réalisation décrits et représentés, mais elle est susceptible de nombreuses variantes accessibles à l'homme de l'art.

## Revendications

1. Procédé de sauvegarde de l'environnement de travail d'une session d'un utilisateur (7) sur un serveur (1) comprenant une première étape (11) de sauvegarde de l'environnement de travail d'une première application de ladite session,
**caractérisé en ce qu'**il comprend au moins une deuxième étape (12) de sauvegarde de l'environnement de travail d'une deuxième application de ladite session différente de ladite première application,
et **en ce que** ladite première étape (11) de sauvegarde et ladite deuxième étape (12) de sauvegarde sont synchronisées entre elles de manière à ce que l'environnement de travail sauvegardé de la première application et l'environnement de travail sauvegardé de la deuxième application soient cohérents entre eux.

2. Procédé de sauvegarde selon la revendication 1, **caractérisé en ce que** l'environnement de travail de ladite première application et l'environnement de travail de ladite deuxième application partagent entre elles des données communes dont l'état est variable au cours du temps, et **en ce que** l'état desdites données communes sauvegardées est identique pour les deux étapes de sauvegarde (11, 12).

3. Procédé de sauvegarde selon l'une quelconque des revendications précédentes, **caractérisé en ce que** toutes les étapes de sauvegarde de toutes les applications de ladite session sont synchronisées entre elles comme lesdites première et deuxième étapes de sauvegarde (11, 12).

4. Procédé de sauvegarde selon l'une quelconque des revendications précédentes, **caractérisé en ce que** toutes les sessions sur ledit serveur (1) sont sauvegardées de la même manière.

5. Procédé de sauvegarde selon la revendication 4, **caractérisé en ce que** toutes les sessions de tous les serveurs (1, 2, 3) d'un même réseau (6) sont sauvegardées de la même manière.

6. Procédé de sauvegarde selon l'une quelconque des revendications précédentes, **caractérisé en ce que** ledit procédé comprend aussi, après lesdites étapes de sauvegarde (11, 12), une étape de redémarrage (18, 21) de ladite ou desdites sessions avec son ou leur environnement de travail sauvegardé.

7. Procédé de sauvegarde selon la revendication 6, **caractérisé en ce que** lesdites étapes de sauvegarde (11, 12) sont effectuées régulièrement, et de préférence périodiquement, et **en ce que** ladite étape de redémarrage (18, 21) est effectuée une fois qu'un incident survenu au niveau dudit serveur (1) est terminé, l'incident étant de préférence une coupure d'alimentation dudit serveur (1) ou une panne matérielle ou logicielle dudit serveur (1) ou une maintenance dudit serveur (1).

8. Procédé de sauvegarde selon la revendication 6 ou 7, **caractérisé en ce que** lesdites étapes de sauvegarde (11, 12) sont effectuées à l'initiative de l'utilisateur (7), et **en ce que** ladite étape de redémarrage (18, 21) est effectuée à l'initiative de l'utilisateur (7).

9. Procédé de sauvegarde selon l'une quelconque des revendications 6 à 8, **caractérisé en ce que** lesdites étapes de sauvegarde (11, 12) sont effectuées sur ledit serveur (1), et **en ce que** ladite étape de redémarrage (18, 21) est effectuée sur un autre serveur (3) différent dudit serveur (1) lorsque ledit serveur (1) reste indisponible après la survenue d'un incident, pendant un temps dépassant une durée prédéterminée, ledit l'environnement de travail sauvegardé étant communiqué à l'autre serveur (3), préalablement à ladite étape de redémarrage (18, 21).

10. Procédé de sauvegarde selon l'une quelconque des revendications précédentes, **caractérisé en ce que** lesdits environnements de travail à sauvegarder sont sauvegardés dans une structure de stockage (4) commune à plusieurs serveurs (1, 2, 3) d'un même réseau (6), et de préférence commune à tous les serveurs (1, 2, 3) d'un même réseau (6).

11. Procédé de sauvegarde selon l'une quelconque des revendications précédentes, **caractérisé en ce que** ladite structure de stockage (4) commune à plusieurs serveurs (1, 2, 3) d'un même réseau (6) est distribuée sur ces mêmes serveurs (1, 2, 3) et utilise une partie du disque de stockage de plusieurs de ces serveurs (1, 2, 3) ou de tous ces serveurs (1,2,3).

12. Procédé de sauvegarde selon l'une quelconque des revendications précédentes, **caractérisé en ce que** chacun des serveurs (1, 2, 3) d'un même réseau (6) signale régulièrement, et de préférence périodiquement, à plusieurs autres serveurs (1, 2, 3) dudit réseau (6), et de préférence à tous les autres serveurs (1, 2, 3) dudit réseau (6), s'il est opérationnel ou non.

13. Procédé de sauvegarde selon l'une quelconque des revendications précédentes, **caractérisé en ce que**, lorsqu'un serveur (1) d'un réseau (6) devient indisponible, un utilisateur (7) ayant ouvert une session sur ce serveur (1), signale cette indisponibilité, à une adresse commune ou à un ordonnanceur de ressources (5), de manière à pouvoir redémarrer, sur un autre serveur (3) de ce réseau (6), sa session sauvegardée qui avait été ouverte sur le serveur (1) maintenant indisponible.

14. Procédé de sauvegarde selon l'une quelconque des revendications précédentes, **caractérisé en ce que** les fonctionnalités dudit procédé sont stockées dans l'espace utilisateur dudit serveur (1) mais sont gérées par le noyau dudit serveur (1).

15. Procédé de sauvegarde selon l'une quelconque des revendications précédentes, **caractérisé en ce que**, lors de la sauvegarde dudit environnement de travail, sont sauvegardées au moins, les variables d'environnement de la session, l'historique des commandes pendant la session, les fonctions utilisées par l'utilisateur (7) mais non définies lors de la connexion de l'utilisateur (7) en début de session, les applications en cours d'exécution pendant la session.

16. Réseau de serveurs **caractérisé en ce qu'**il stocke et qu'il est configuré pour effectuer régulièrement, et de préférence périodiquement, le procédé de sauvegarde selon l'une quelconque des revendications précédentes, au niveau de plusieurs serveurs (1, 2, 3) dudit réseau (6), et préférence au niveau de tous les serveurs (1, 2, 3) dudit réseau (6).

17. Réseau de serveurs selon la revendication 16, **caractérisé en ce qu'**il ne comprend pas de système de maintien de l'alimentation électrique en cas d'incident, et **en ce que** de préférence il ne comprend pas d'onduleur.

18. Réseau de serveurs selon la revendication 16 ou 17, **caractérisé en ce qu'**il comprend au moins 2 serveurs (1, 2, 3), de préférence au moins 10 serveurs (1, 2, 3), encore plus de préférence au moins 100 serveurs (1, 2, 3), et encore plus de préférence au moins 1000 serveurs (1, 2, 3).
